# EUROPEAN PATENT SPECIFICATION

(11) **EP 0 762 304 B1**
(45) Date of publication and mention of the grant of the patent: **19.03.1997**
(21) Application number: 95114467.4
(22) Date of filing: 14.09.1995
(51) Int. Cl.: G06F 17/60

(54) **Computer system for data management and method for operating said system**
Computersystem zur Datenverwaltung und Verfahren zum Betreiben dieses Systems
Système informatique pour la gestion de données et méthode pour faire fonctionner ce système

(43) Date of publication of application: 12.03.1997
(73) Proprietor: CITIBANK AKTIENGESELLSCHAFT, 60311 Frankfurt (DE)
(72) Inventor: Friedman, Elisabeth, Falmouth, Cornwall TR11 5JW (GB); Irwin, Fred, 60599 Frankfurt (DE); Johnson, Mark, Greater ManchesterWN2 2SN (GB); Lieven, Andreas T., 65779 Kelkheim (DE); Pfundt, Dieter, 65719 Hofheim (DE); Potter, Neil, Westfield NJ 07090 (US); Raschdorf, Andreas, 61267 Neu Anspach (DE); Rayner, Peter, Westfield NJ 07090 (US); Torremante, Maria, 65187 Wiesbaden (DE)
(74) Representative: Beetz & Partner Patentanwälte

(56) References cited:
- EP-A- 0 513 484
- GB-A- 2 277 389
- US-A- 5 305 200

## Description

The invention relates to a computer system for data management and to a method for operating said system, and more particularly, to an automated warrant trading system (citi CATS-OS).

Over the last years the market for warrant trading has been rapidly increasing. From 1991 to 1995 the amount of warrants traded grew from about 400 to 4,000.

According to the prior art, the trading of warrants is very often time- and cost-intensive, since, upon a consumer inquiry, it is necessary for the customer in a local bank to start a search by telephone or a search in publications to find the best warrant for the consumer. Usually, if the consumer wishes to purchase warrants, he first contacts his local bank which is processing the order through the stock exchange or placing a call to a warrant market maker. Since an on-line information and trading system about traded warrants with executable prices does not exist, the customer in the local bank is not able to provide the consumer with the actual on-line information. Hence, there exists a time difference between the placing of the buy/sell order by the customer and its implementation, resulting in a risk of exchange and/or price rate fluctuations in that time. It is even often the case that the implementation of the buy/sell order was based on a limit oriented on the rates of the day before, since the order could not be implemented on the same day. Reasons for this time delay are either the fact that the order is placed a couple of hours before it will be executed at the stock exchange or that the dealing room phones at the market maker are often busy during the hectic market times. Therefore, local banks often place blind orders at unknown prices for the customers and they do not receive immediate deal confirmations.

The object of the present invention is to realize a computer system for data management and a method for operating said system, which realize a data management providing instantaneous data with an improved accuracy and a reduced error probability when processing data transactions, combined with a high security.

The object is solved according to the features of the independent claims. The dependent claims show advantageous embodiments and further developments of the invention.

The computer system for data management including at least the management of data relating to the trading of warrants, comprises a data processing system, an input unit, a display unit and a data input. In order to perform a transaction of data, the display unit displays a first mask having a format allowing the input of a request for specific data by the input unit. The specific data can relate to warrant rates. If the request for specific data is input, e.g. a request for a specific warrant, the data input is read which can receive permanently a data stream including warrant rates. After having read the data stream, the display unit displays a second mask including the read data. After having received the requested data, the data processing system holds the data for a predetermined time period and performs a transaction relating to the specific data, if a transaction request is input by the input unit during a predetermined time period.

Since the data processing system holds the requested data, e.g. a warrant rate with a specific stock exchange number and a volume thereof, for a predetermined time period, it is only possible to perform a transaction, e.g a buy request, based on the displayed data during that time period. When this time period has elapsed, the request for a transaction cannot be input any longer, so that a re-request for new specific data has to be issued. Such a re-request causes the reading of the data input in order to gain new actual data, e.g. the warrant rates.

The computer system according to the invention allows to display specific data on-line including warrant rates, wherein the display unit displays a trading mask allowing the input of a request for the specific data. The design of the trading mask is independent of the type of the specific data. Therefore, the trading mask will be similar, if the data management comprises the management of data relating to the trading of stocks, bonds, derivatives or foreign exchange. The same applies to the quotation mask which also has a similar format for different types of data. Therefore, the user does not need to get used to a new format of the trading or the quotation mask, if he handles different types of data. This leads to an easy-to-use system, even if different types of data are to be handled.

The system according to an embodiment of the invention provides instantaneous executable warrant rates, so that orders can be immediately fulfilled for customers. Accordingly, the risk of exchange and/or price rate fluctuations is eliminated, since an executable price is electronically provided and it is possible to act on it. Furthermore, an immediate electronic trade confirmation is provided with a complete audit trail. With the inventive system, even smaller banks can improve their efficiency by providing real time rates and information, since the system can also be provided with a mail and request for quote (RFQ) function allowing a communication between the customer and the trader.

It is possible to process transactions at the price on the display unit, which is a binding contract between the customer and the trader. This protects against any misunderstandings between the customer and the trader, which can easily happen if a buy/sell order is placed via telephone.

The system is designed to expand and enhance the qualitiy and efficiency of the user's overall warrant operation, enabling improved customer service and increasing the capacity with minimum incremental costs.

In accordance with an embodiment of the invention, the system is realized using the client-server architecture. A number of devices communicate using a security network. The devices perform their computational tasks according to messages received from the security network. The devices then transmit the results back to the external device or onto the next device using the same security network. A communication is prohibited between devices other than through the security network.

Furthermore, each sending device transmits a respective identification information and the security network checks for every data transferred through the same, if the identification of the respective sending device fits with prestored information stored during an authorisation procedure. By these measures a very secure and safe system can be gained, which does not allow any unauthorized access.

The invention will now be described by way of examples and with reference to the accompanying drawings in which:
- Fig. 1: is a block diagram of the computer system according to the invention;
- Fig. 2: is a block diagram of the data processing system;
- Figs. 3a and 3b: are flow charts showing a transaction procedure relating to warrants according to an embodiment of the invention;
- Fig. 4: is a flow chart showing the transaction procedure of warrants according to another embodiment of the invention;
- Fig. 5: is an access control screen;
- Fig. 6: is a transaction screen without an instrument number and a volume indication;
- Fig. 7: is the transaction screen with a stock exchange number (instrument number) and a volume indication;
- Fig. 8: is a quotation screen including the actual price of the required warrant and further information relating to the specific warrant;
- Fig. 9: is a trade confirmation screen;
- Fig. 10: is the transaction screen showing the input of a view rates request;
- Fig. 11: is a blank rates page screen;
- Fig. 12: is a filled rates page screen;
- Fig. 13: is a transaction detail screen;
- Fig. 14: is a transaction summary screen;
- Fig. 15: is a sanity check screen;
- Fig. 16: is a price time-out screen and
- Fig. 17: is a credit limit screen.

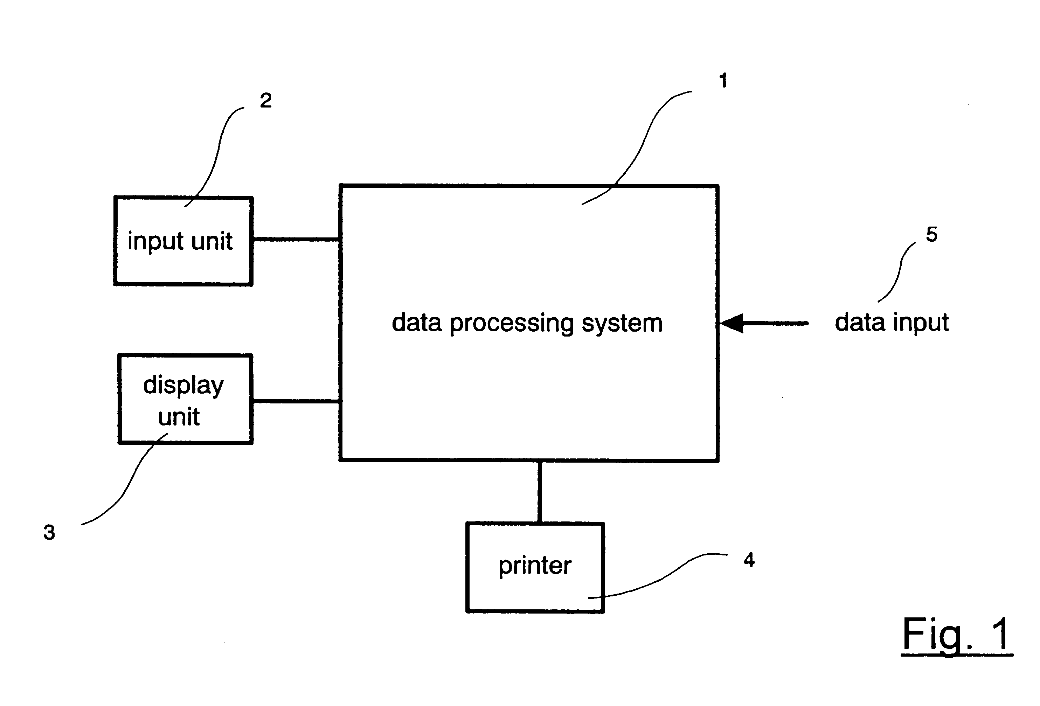

Fig. 1 shows a block diagram of the computer system according to the invention. A data processing system 1 is connected to an input unit 2, a display unit 3 and a printer 4. The data processing system 1 receives a data stream from a data input 5.

The input unit 2 can be realized by a key board, a mouse or any other input device. The display unit 3 can be realized by a standard personal computer monitor.

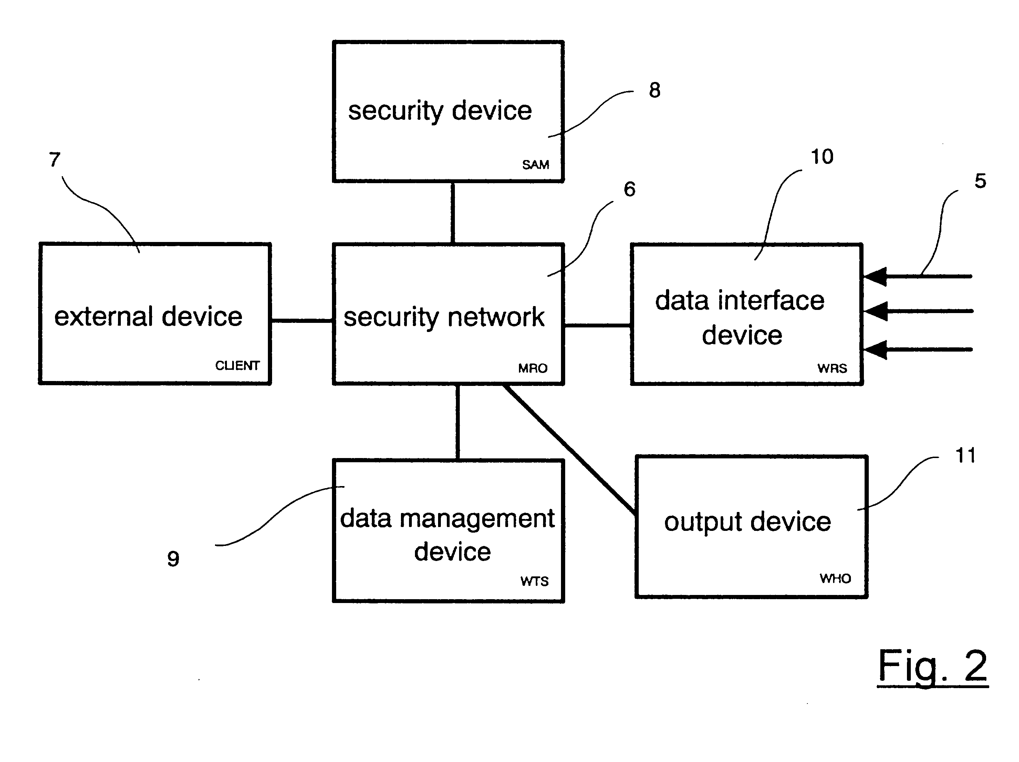

Fig. 2 shows a possible configuration of the data processing system 1. A security network 6 is connected to an external device 7, a security device 8, a data management device 9, a data interface device 10 and an output device 11, wherein the input unit 2, the display unit 3 and the printer 4 can be part of the external device 7.

The external device 7 can be a personal computer (PC) including a graphic user interface (GUI) for being connected to the security network 6 via a modem. The devices of the data processing system 1 can be realized as separate and independent communicating servers (client-server architecture). In particular, the security network 6 can be realized by an adequate number of message routers (MRO) . The security device 8 can be realized by a security access manager (SAM). The data interface device 10 can be realized by a warrant rate server (WRS). The data management device 9 can be realized by a warrant transaction server (WTS). The output device 11 can be realized by a warrant hand-off server (WHO). Furthermore, there can be provided a credit server (CRS) and a mail server (MAI), both communicating with a message router.

In the following a short explanation of examples relating to the functions of the different servers is given.

As mentioned above, the computer system according to the invention consists of a number of servers communicating using message routers. The network connection between the servers and the message routers enables a used ITS (information trading and settlement system) to be distributed over a number of VAX processors.

The ITS servers perform their computational task according to messages received from their adjacent message router. The server transmits the results back to the user or on to the next server using the same message router network. A communication is prohibited between servers other than through the message routers.

One server (the data interface device - warrant rate server) is connected to a rate feed, a data base, etc. encapsulating this resource for the rest of the ITS network. At the center of the system there is the data management device (WTS) which draws upon these resources to provide the complete service to the user interface (graphic user interface - GUI or host user interface - HUI). Furthermore, there is provided ancillary service used to maintain the security of the ITS system by restricting access and controlling which servers may communicate with others.

The message routers (security network) are responsible for conveying messages from one server to another. The ITS system comprises a number of routers interconnected such that communication between any two servers is possible. At the center of the system, the security device (SAM) is located, which is connected to every message router. The SAM maintains a list of authorized users and accesses to validate user passwords. The SAM also issues a unique ITS address to each server, which is used by the router to direct messages to the correct destinations and enhances also the security of the system against unauthorized access.

The SAM maintains user accounts, access restriction and privileges. Furthermore, the SAM uses an indexed file to define a list of authorized users, including service and message routers and their respective addresses. The SAM stores passwords relating to user accounts and maintains a list of authorized users and their respective addresses. Furthermore, the SAM maintains a map of which server is connected to which router in a second indexed file and writes errors into an error file. The MRO forwards messages between servers according to their respective addresses. Furthermore, it translates protocols between the respective servers and verifies new connections with the SAM to prevent unauthorized users from sending messages. The WTS is a multithreaded product server using a number of concurrent logins on a sybase data base. It communicates with the users of the system and executes and stores warrant transactions. The users of the system are, in this respect, e.g the graphic user interfaces being loaded on PCs which use a dial-up procedure to be connected to the respective message router. The WTS maintains user accounts, trading relationships and holiday tables. Furthermore, the WTS checks credit lines using the CRS and provides access to and obtains prices from the WRS. Additionally, the WTS uses the MAI to inform traders of system events. The MAI is a multithreaded product server using a sybase data base to store and forward user and system mail messages within the system. It maintains a list of user accounts and mail names for mailing purposes. The WRS receives data streams of price and page updates from Reuters Taps (e.g. 24) and the Invision system and builds pages of rate data in a global section. The received data streams are stored in a specific memory location of the WRS and these specific memory locations are overwritten every time new data are received. The WRS receives page and price requests from the WTS and returns results for display on the display unit 2 or for quotation purposes. Furthermore, it uses a file to define rate page layouts and the location of the specific rates. The CRS maintains a list of customer-related credit values. It uses an indexed file to store the latest credit values. The graphic user interface (GUI) being loaded on the client (PC), is a PC user interface for the system. The GUI runs on PCs at the customer and the trader sites, using the TCP/IP (Transmission Control Protocol/Internet Protocol) protocol to be connected directly with a message router. The WHO hands off complete transactions to the direct dealer interface (DDI) by writing them into a dedicated sybase data base on the DDI system. It formats and prints deal tickets to a ticket printer located on the dealing floor where the traders are located.

A number of system servers are configured so as to have dependency servers. During start-up, these servers wait for their dependencies to start before going on-line. The dependency relationship is implemented where a server relies upon another server to provide a system resource that is necessary for the server to function. E.g. the WTS cannot function, unless the WRS is running. The WTS is configured with the WRS as a dependency.

The servers check the presence of their dependencies by sending ping messages. If a dependency is not found, the server writes an error to the log, waits and then tries to ping the dependency again. When all the dependencies are detected, the server writes a server-up message in the log.

The servers return to pinging their dependencies, if a message cannot be delivered to a dependent server. The operation of the server is temporarily suspended until the dependency has been successfully pinged. In particular, the WTS has the WAS, the MAI, the CRS and the WHO as dependencies. The WRS, the CRS and the WHO have the MAI as dependency.

The system is configured with delay periods during the start-up procedure. Therefore, the dependency servers can be started first and with sufficient time to start, before the next server is started. The order of the starting of the servers and the delays between successive servers is prestored and can be adapted to hardware requirements.

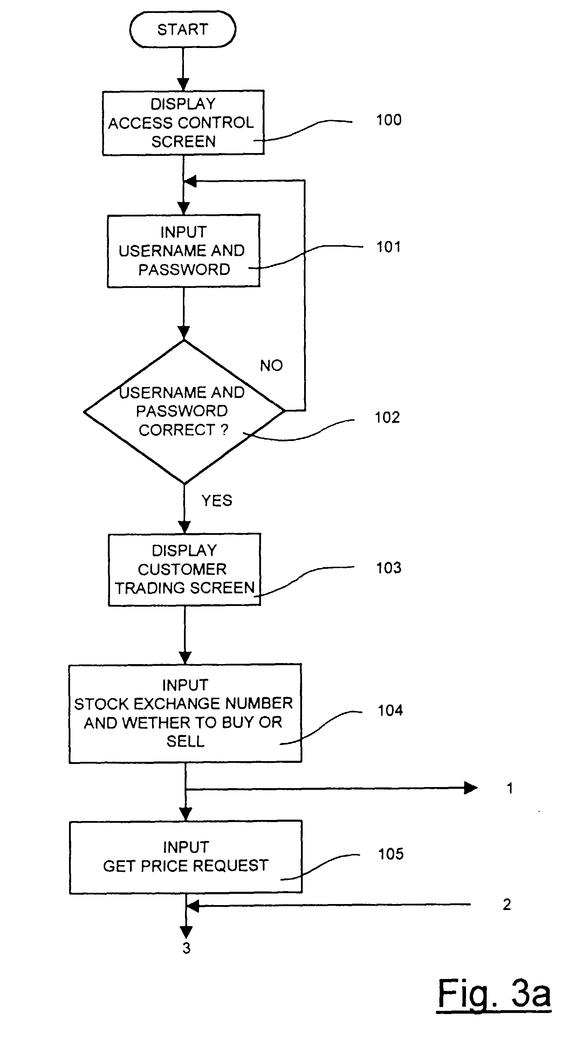

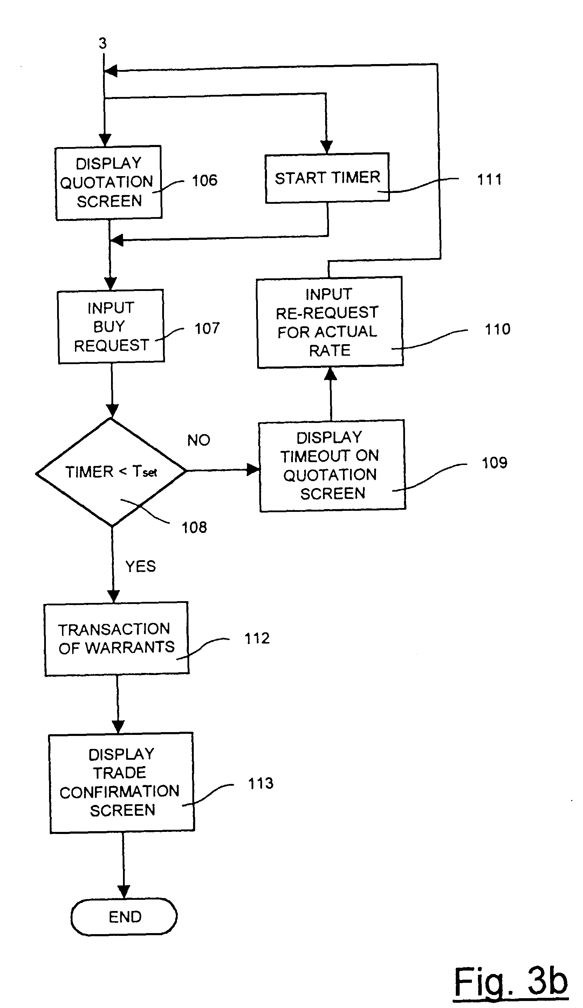

Figs. 3a and 3b show an example of system steps necessary for performing a warrant transaction. After the power-on of the user PC, and after starting of the automated trading system for warrants on the PC, an access control screen 12 is displayed (step 100). In the access control screen 12 the identification information is to be input (user name and the security password). This has to be performed via the input unit 2 (step 101). After inputting a logon request, e.g. by pressing the logon button on the access control screen 12 by a respective mouse action, the system verifies the input details before the user is permitted to access any part of the system (step 102). If the user name and the password are checked, a customer trading screen 13 is displayed on the display unit 3 (step 103).

The customer trading screen 13 allows the input of a stock exchange number of a specific warrant, the volume and whether to buy or sell (step 104). After the inputs of step 104, a get price request can be issued (step 105). Thereafter, a quotation screen 14 is displayed (step 106). At the same time a timer is started (step 111). Via the input unit 3 a buy request for the displayed warrant can be input (step 107). At step 108 it is checked, if the buy request was input within a certain time period Tₛₑₜ or not. If this is not the case, the quotation screen 14 displays a time-out indication and the buy request input at step 107 is not performed. After step 109 it is possible to input a re-request for gaining a new actual rate (step 110). Thereafter, the quotation screen 14 is again displayed with updated data (step 106). If the predetermined time period Tₛₑₜ at step 108 did not elapse before the buy request was input in step 107, a transaction of warrant is performed (step 112). Thereafter a trade confirmation screen 15 is displayed (step 113).

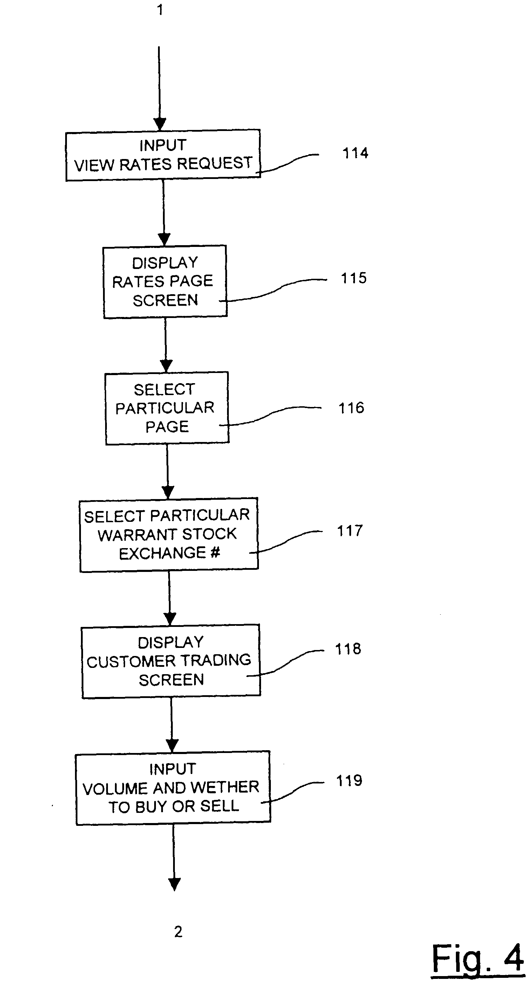

Fig. 4 shows a flow chart relating to another embodiment of the present invention. When displaying the customer trading screen 13, it is possible to input a view rates request (step 114). The view rates request can be input, e.g., by opening a pull-down menu on the trading screen 13. This can be performed, if the customer is, e.g., not exactly sure about the stock exchange number of the warrant to be bought or sold. Furthermore, it is possible, that the customer only wants to get an overview of actual rates and data of warrants. After having input the view rates request, a rates page screen 16 is displayed (step 115). On the rates page screen 16 a particular page 17 can be selected (step 116) and a particular warrant can be accessed by selecting a warrant stock exchange number 18 (step 117). Thereafter, the customer trading screen 14 is displayed (step 118) and the volume and whether to buy or sell is input via the input unit 3 (step 119). Thereafter, the procedure goes back to the process shown in Fig. 3 between steps 105 and 106.

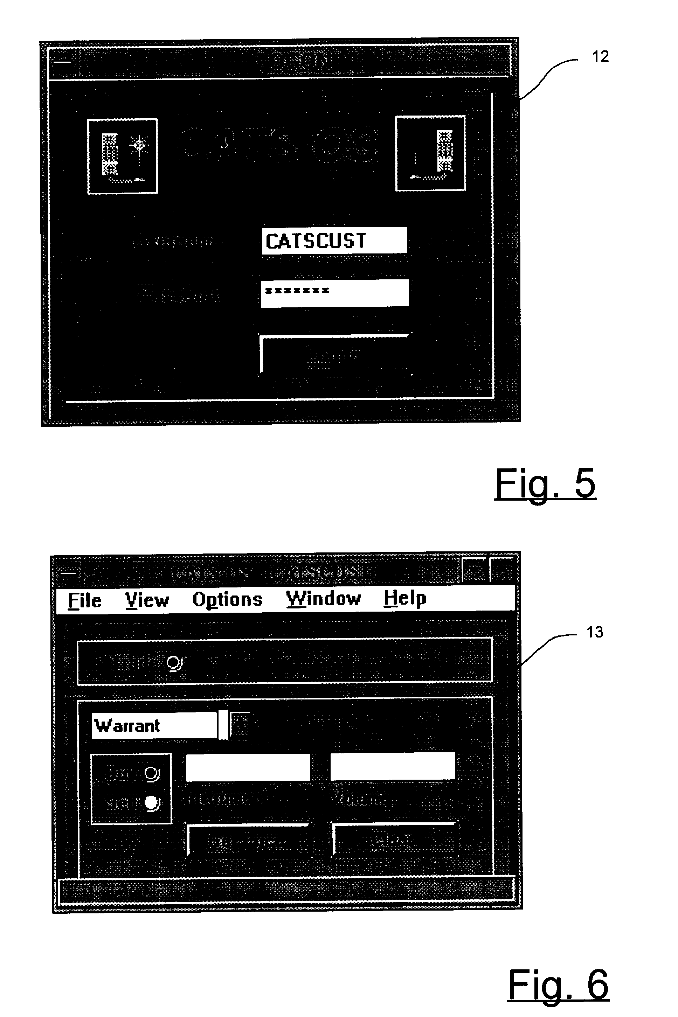

Fig. 5 shows the access control screen 12 which is used for inputting the user name and the security password. After the user name and the security password have been input, a logon request can be issued.

Fig. 6 shows the customer trading screen 13. The customer trading screen is preset to the trading of warrants. However, this screen can also be used for the trading of other securities, e.g. stocks, bonds, derivatives or foreign exchange. Furthermore, it is possible to input in the customer trading screen 13 whether a warrant (or another security) is to be bought or sold.

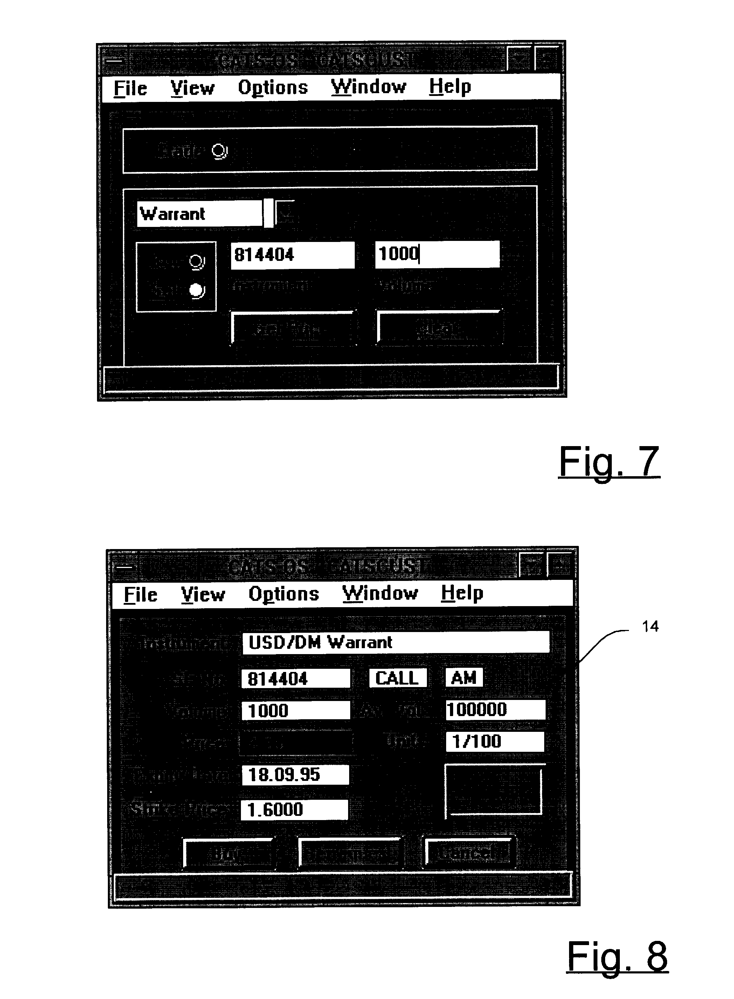

Fig. 7 shows the customer trading screen 13 with an instrument number and a volume input via the input unit (3).

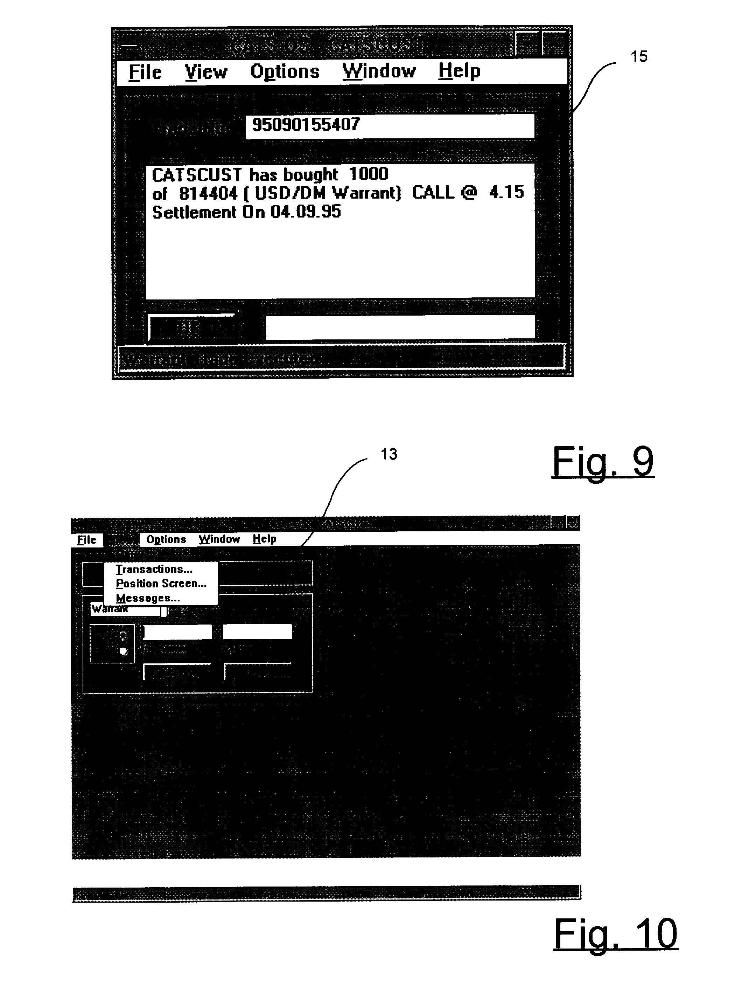

Fig. 8 shows the quotation screen 14 after the get price request has been input, while displaying the customer trading screen (Fig. 7). The quotation screen 14 shows all the data necessary for a warrant transaction. Upon the display of the quotation screen 14, the timer is started (step 111) which only allows the input of a buy request within the predetermined time period Tₛₑₜ. If the buy request is not input during the time period T_{Set} a time-out notice will be displayed in the quotation screen 14. If such a time-out notice appears on the quotation screen 14, it is no longer possible to issue a buy request for specific warrants. In order to load new data onto the quotation screen, it is necessary to input a re-request. If such a re-request is input, the quotation screen 14 will be re-filled with actual data and the timer will be started again.

Fig. 9 shows the trade confirmation screen 15 which is displayed when the buy request is input in time. The trade confirmation screen 15 includes a trade number and allows the input of a customer reference number. This screen gives the customer an instantaneous electronic confirmation of the executed warrant trade.

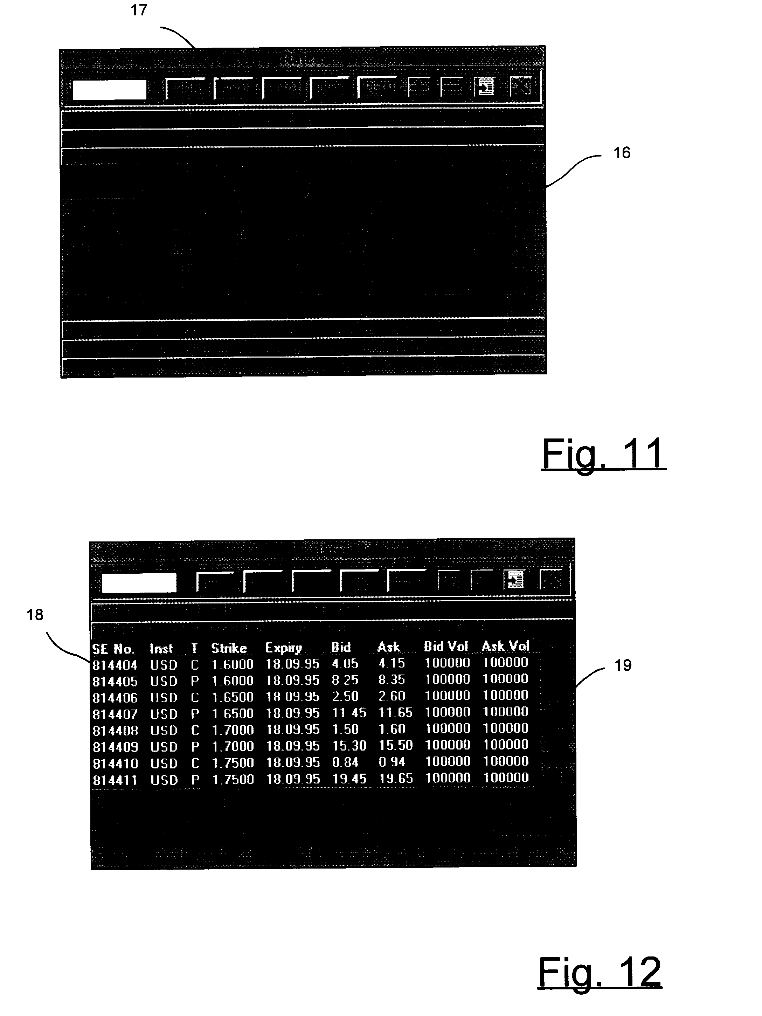

Fig. 10 shows the transaction screen 13 with the pull-down menu allowing the input of the view rates request.

In Fig. 11 there is shown the blank view rates page 16 displayed on the display unit 3, if the view rates request is issued.

In Fig. 12 there is shown the rates page screen 19 which displays pages of warrant rates to the customer and trader. This screen also permits the user to display a particular page by entering the page number. Furthermore, the user may enter details and search for a particular warrant by name. Moreover, the user may use the plus or minus input to view pages sequentially. In addition, a refresh rates request may be input by actuating the arrow button. If a certain instrument is selected on the rates page screen 17 (the same can be selected, e.g., by a double click on the stock exchange number with the mouse), the quotation screen 14 is displayed (Fig. 8).

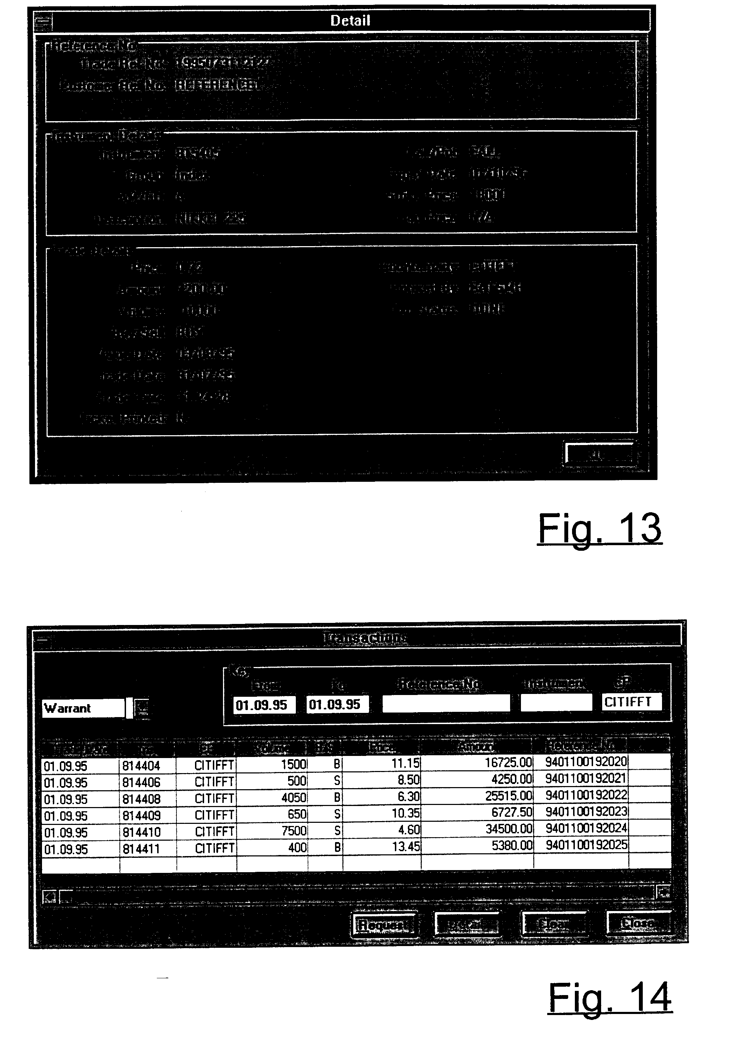

Fig. 13 shows the trade detail screen displaying all the transaction details about a particular trade to the customer or trader.

Fig. 14 shows a transaction history screen which is displayed on the display unit 3 when the past deals are to be displayed. The system allows to set the criteria of the deals which are to be displayed, e.g. the date range, the customer reference number, the trade identification and the instrument. The data parameters may span a maximum of 60 days, since this is the maximum storage time of trade data. However, it is possible to set a different storage time, so that it is possible to review deals which were performed earlier.

The system as described before with reference to the Figures 5 - 14 is designed for being used by a customer sitting at a local bank and a trader being located at the warrant market maker. However, there do exist also features which are only accessible by the trader. Examples of these features are described in the following.

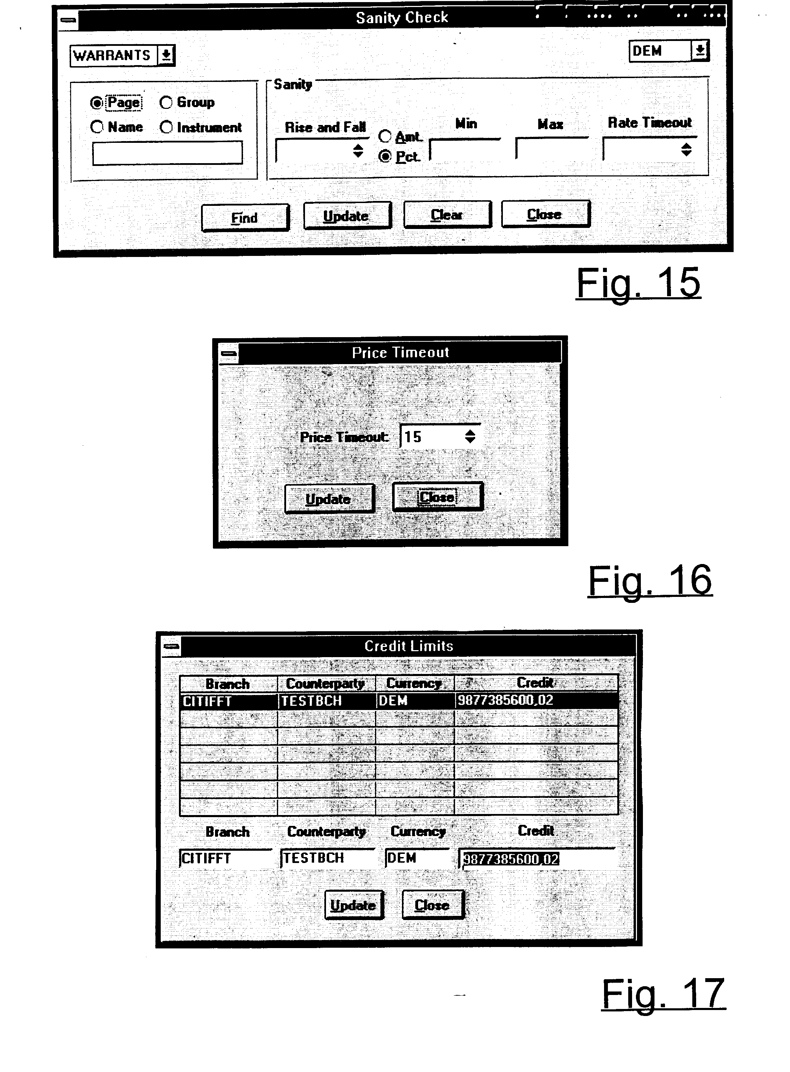

Fig. 15 shows a sanity check screen allowing the input of a maximum rise and fall amount of the rates input in the system. More particularly, with the sanity check it is possible to preset a maximum variation of the input data 5. If, e.g., the rate of a specific warrant changes from one view rates request to the next view rates request by 0.2 and the sanity check is set to 0.1, this specific instrument will be suspended. Furthermore, it is possible to input a bandwidth for the rates. The sanity check introduces a high security in the system, since it makes it possible to filter out system faults like data transmission errors.

Fig. 16 shows the price time-out screen. In the price time-out screen it is possible to input the time Tₛₑₜ which is used to determine if a buy request input in the quotation screen 14 is performed or not (Fig. 3, steps 106-111). The physical unit of Tₛₑₜ is seconds. Tₛₑₜ is normally adjusted to 10s, however, there can be input suitable other values.

Fig. 17 shows the credit limit screen which allows to set credit limits for customers. These credit limits are handled by the credit server and ensure that the total value of unsettled trades for any given customer does not exceed a given value which can be input in the credit field via the input unit 2. If a customer tries to enter a transaction exceeding this value, it will be rejected and an on-screen message is displayed asking to contact the trader.

In order to explain the various functions of the system according to the invention in more detail, the following examples are given.

During a logging-on procedure, the PC (client) places a TCP/IP call to one of the message routers (MRO) . The MRO accepts the call and allocates a specific device channel for the PC. The user enters the user name and password which is transmitted to the MRO. The MRO passes details about the user and the method used to place the call (the caller's user name and note) to the security access manager (SAM). The SAM verifies if the user is permitted to be connected to the system and informs the MRO. The MRO transmits an acceptance to the PC. The PC sends an independent registration message to the warrant trade server (WTS) and to the mail server (MAI). The WTS checks its user profile table and allocates a session to the user. The MAI checks the user profiles and returns a message indicating the number of mail messages waiting for the user. The PC down-loads various items from the WTS.

During a view rates procedure the PC transmits a rate page request containing the rate page number to the WTS. The WTS verifies, if the user is permitted to view rates and passes the request on to the warrant rate server (WAS). The MRS builds the rate page and returns it to the WTS. The WTS forwards the rate page details to the user.

During an executing transactions procedure the PC transmits a quote request containing the stock exchange number and the volume to the WTS. The WTS receives the quote request and sends a rate request to the WRS. The WRS gets the rate and transmits it back to the WTS. The WTS executes a sybase stored procedure to insert a quotation into its data base. A reference number is assigned to the quotation. The WTS collects the results from sybase and returns a quotation message with the price and instrument details to the PC. The PC displays the quotation and the user decides to execute (steps 106 and 107). The PC transmits an execute request to the WTS referring to the transaction by reference number. The WTS executes a stored procedure which searches the transaction data base for the original quotation. The WTS then checks, if the quote has not timed out (step 108). If everything is in order, the WTS transmits a volume request to the WRS, which depletes the instruments volume and returns a message to the WTS. The WTS sends a credit request to the credit server (CRS). The CRS depletes the user's credit line and returns a message to the WTS. Finally, the WTS executes a stored procedure to convert the quotation into an executed deal. The details of the deal are passed back to the PC.

As can be seen from the screens and masks as discussed before, the input masks are always designed for allowing the input of different types of data. Therefore, the user only has to get used to one screen and mask design in order to be able to handle all different securities which can be managed with the system according to the invention. Accordingly, there is provided a computer system for the data management including at least the management of data relating to the trading of warrants, which is easily adaptable to the handling of different types of data, e.g. stocks, bonds, derivatives and foreign exchanges. Furthermore, the system according to the invention provides a high security with regard to the handled data. As described above with reference to Fig. 15, it is possible to introduce a sanity check which allows to control and to verify the data input into the system. Furthermore, it is possible to set credit limits and a price time-out so that the risk for both sides is lowered, since it is possible that after displaying the quotation screen the warrant rate changes strongly. This might lead either to a disadvantage for the customer or to a disadvantage for the trader, depending on a rise or fall of the respective rate.

The computer system according to the invention is an easy-to-use system which allows to initiate and execute e.g. warrant transactions electronically. This system provides a direct electronic connection between a user's PC and the warrants trading desk. It allows a user to trade all warrants made available by the warrant market maker at market driven prices and with customized security.

The system enables an improved customer service and an increased capacity with minimum incremental costs. Furthermore the system is a trader driven system and mirrors the way traders work to give them the same control over their positions as according to a transaction performed in line with the prior art described.

The computer system according to the invention can be realized with the graphic user interface (GUI) loaded on the PC or with a host user interface (HUI) implementing the VT 100 emulation standard.

## Claims

1. Computer system for data management including at least the management of data relating to the trading of warrants, comprising
a data processing system (1), an input unit (2), a display unit (3) and a data input (5) receiving at least warrant rates, wherein
- the display unit (3) displays a first mask having a format allowing the input of a request for specific data including at least warrant rates by the input unit (2),
- the data input (5) is read if the request is input by the input unit (2),
- the display unit (3) displays a second mask including the requested data, and
- the data processing system (1) holds the requested data for a predetermined time period Tₛₑₜ and performs a transaction relating to the specific data, if a transaction request is input by the input unit (2) during a predetermined time period Tₛₑₜ.

2. Computer system according to claim 1,
wherein
the first mask is a trading mask (13) and the second mask is a quotation mask (14).

3. Computer system according to claim 2,
wherein
the trading mask (13) allows the input of an identification number for the specific data by the input unit (2) in order to read the specific data from the data input(5).

4. Computer system according to claim 3,
wherein
the identification number is a stock exchange number.

5. Computer system according to claim 2,
wherein
the trading mask (13) allows the input of a request for a rates page (18) including a plurality of specific data and the rates page (18) allows the input of the request for specific data.

6. Computer system according to at least one of claims 1 to 5, wherein
the data processing system (1) comprises a security network (6) connected to an external device (7), a security device (8), a data management device (9), a data interface device (10) and an output device (11), the external device (7) includes the input unit (2) and the display unit (3).

7. Computer system according to claim 6,
wherein
upon the input of the request for specific data by the input unit (2),
- the external device (7) outputs the request for specific data and transmits the request to the security network (6),
- the security network (6) checks the request regarding its authorization and transmits the same to the data management device (9) if the performed checking resulted in an authorization of the external device (7) for the data management device (9),
- the data management device (9) outputs a message to the security network (6) in order to access data (5) from the data interface device (10) if the performed checking resulted in an authorization of the external device (7) for the data interface device (10),
- the data interface device (10) transmits the accessed data to the data management device (9) via the security network (6) and
- the data management device (9) transmits the data to the external device (7) via the security network (6).

8. Computer system according to claim 6 or 7,
wherein
each sending device transmits a respective identification information and the security network (6) checks for every data transfer through the same if the identification of the respective sending device fits with prestored information stored during an authorization procedure.

9. Computer system according to at least one of claims 6 to 8, wherein
during the authorization procedure
- the security network (6) reads identification information from the external device (7) and
- the security device (8) checks the identification information and outputs an access authorization which is stored in the security network (6).

10. Computer system according to at least one of claims 6 to 9, wherein
at the time of the first connection of the external device (7) to the security network (6), the security network (6) sends a seed to the external device (7) and the external device (7) encrypts the identification information according to the seed and transmits the encrypted identification information to the security network (6).

11. Computer system according to claim 10,
wherein
the security network (6) transmits the received encrypted identification information together with the seed to the security device (8) which decrypts the identification information and performs a security check.

12. Computer system according to at least one of claims 6 to 11, wherein
during the authorization procedure the security device (8) is checking if
- the transmitted user information matches with data stored in an authorization file in the security device (8),
- a predetermined number of security requirements are fulfilled, including data of access and number of login fails, and
- the identification information was sent from the security network (6), and
the security device (8) is reading a prestored address information out of an address file if the security check is positively fulfilled and sends the address information to the security network (6).

13. The computer system according to claim 12,
wherein
the security network (6) stores the address information in order to define to what parts of the computer system the external device (7) may have access.

14. Computer system according to claim 12 or 13,
wherein
the security device (8) determines if the prestored address information is sent from the security network (6) by checking if the channel on which the security network (6) is sending is equal to a channel given to the security network (6) during the setup procedure, wherein the security network (6) is the only device allowed to transmit and receive data to and from the security device (8).

15. Computer system according to at least one of claims 6 to 14, wherein
the data management device (9) is storing a dependency list including information regarding the devices which are needed for a specific data management.

16. Computer system according to claim 15,
wherein
during a start-up procedure the data management device (9) is checking according to the dependency list if all required devices are in an on-line status before the data transfer for a specific data management is activated.

17. Computer system according to at least one of claims 6 to 16, wherein
the data interface device (10) receives permanently a data stream including at least warrant rates and stores the data in specific memory locations, wherein new data coming in is overwriting the old data on the specific memory location.

18. Method of operating a computer system for data management including at least the management of data relating to the trading of warrants comprising the steps of
- displaying on a display unit (3) a first mask having a format allowing the input of a request for specific data including at least warrant rates by an input unit (2),
- reading the requested data, if the request is input by the input unit (2),
- displaying on the display unit (3) a second mask including the requested data,
- holding the requested data for a predetermined time period Tₛₑₜ, and
- performing a transaction relating to the specific data if a transaction request is input by the input unit (2) during the predetermined time period Tₛₑₜ.

19. Method according to claim 18,
wherein
the first mask is a trading mask (13) allowing the input of an identification number for the specific data by the input unit (2) in order to read the specific data from the data input (5).

20. Method according to claim 19,
wherein
the identification number is a stock exchange number.

21. Method according to claim 18,
wherein
the first mask allows the input of a request for a rates page (18) including a plurality of specific data and the rates page (18) allows the input of the request for specific data.

22. Method according to claim 21,
wherein
the rates page (18) allows the input of a refresh rates request resulting in a reading of the listed plurality of specific data and displaying the same in the rates page (18) on the display unit (3).

23. Method according to at least one of claims 18 to 22,
wherein
the input of a request for specific data or the refresh rates request causes the reading of a data stream being permanently received by the system from the data input (5).

24. Method according to at least one of claims 18 to 23,
wherein
the second mask is a quotation mask (14) allowing the input of a re-request for the specific data, if the transaction request is not input during the predetermined time period Tₛₑₜ.

25. Method according to at least one of claims 18 to 24,
wherein
displaying a trade confirmation mask (15) on the display unit (3), if the transaction request is input in time, including transaction information.

26. Method according to at least one of claims 18 to 25,
wherein
the trading mask (13) and the quotation mask (14) are displayed on the display unit (3) on different screens or on one screen.

27. Method according to at least one of claims 18 to 26,
wherein
the data management comprises the management of data relating to the trading of stocks, bonds, derivatives or foreign exchange, wherein the specific data include stock rates, bond rates, derivative rates or foreign exchange rates.

## Patentansprüche

1. Computersystem für das Durchführen eines Datenmanagements, das zumindest das Management von Daten betreffend dem Handeln von Optionsscheinen enthält, mit
einem Datenverarbeitungssystem (1), einer Eingabeeinheit (2), einer Anzeigeeinheit (3) und einem zumindest Optionsscheinkurse empfangenden Dateneingang (5), wobei
- die Anzeigeeinheit (3) eine erste Maske darstellt, die ein Format aufweist, welches die Eingabe einer Anforderung für spezifische zumindest Optionsscheinkurse enthaltende Daten über eine Eingabeeinheit (2) erlaubt,
- der Dateneingang (5) gelesen wird, wenn die Anforderung durch die Eingabeeinheit (2) eingegeben wird,
- die Anzeigeeinheit (3) eine zweite Maske anzeigt, die die angeforderten Daten enthält und
- das Datenverarbeitungssystem (1) die angeforderten Daten für eine vorbestimmte Zeitdauer Tₛₑₜ hält und eine Transaktion betreffend den spezifischen Daten durchführt, wenn eine Transaktionsanforderung durch die Eingabeeinheit (2) während der vorbestimmten Zeitdauer Tₛₑₜ eingegeben wird.

2. Computersystem nach Anspruch 1, in dem die erste Maske eine Handelsmaske (13) und die zweite Maske eine Quotationsmaske (14) ist.

3. Computersystem gemäß Anspruch 1 oder 2, in dem die Handelsmaske (13) die Eingabe einer Identifikationsnummer für die spezifischen Daten durch die Eingabeeinheit (2) erlaubt, um spezifische Daten von dem Dateneingang (5) zu lesen.

4. Computersystem nach Anspruch 3, in dem die Identifikationsnummer eine Wertpapierkennummer ist.

5. Computersystem nach Anspruch 1 oder 2, in dem die Handelsmaske (13) die Eingabe einer Anforderung für eine Kursseite (18) erlaubt, die eine Vielzahl von spezifischen Daten enthält und die Eingabe der Anforderung für spezifische Daten erlaubt.

6. Computersystem nach zumindest einem der Ansprüche 1 bis 5, in dem das Datenverarbeitungssystem (1) ein Sicherheitsnetzwerk (6) enthält, das mit einer externen Vorrichtung (7) verbunden ist, weiterhin eine Sicherheitsvorrichtung (8) enthält, eine Datenmanagementvorrichtung (9), eine Datenschnittstellenvorrichtung (10) und eine Ausgabevorrichtung (11), wobei die externe Vorrichtung (7) die Eingabeeinheit (2) und die Anzeigeeinheit (3) enthält.

7. Computersystem nach Anspruch 6, in dem auf die Eingabe der Anforderung für spezifische Daten durch die Eingabeeinheit (2) hin
- die externe Vorrichtung (7) die Anforderung für spezifische Daten ausgibt und die Anforderung zu dem Sicherheitsnetzwerk (6) überträgt,
- das Sicherheitsnetzwerk (6) die Anforderung betreffend ihrer Autorisierung überprüft und dieselbe zur
- Datenmanagementvorrichtung (9) überträgt, wenn die durchgeführte Überprüfung eine Autorisierung der externen Vorrichtung (7) für die Datenmanagementvorrichtung (9) ergibt,
- die Datenmanagementvorrichtung (9) eine Nachricht zu dem Sicherheitsnetzwerk (6) ausgibt, um auf Daten (5) von der Datenschnittstellenvorrichtung (10) zuzugreifen, wenn die durchgeführte Prüfung eine Autorisierung der externen Vorrichtung (7) für die Datenschnittstellenvorrichtung (10) ergibt,
- die Datenschnittstellenvorrichtung (10) die zugegriffen Daten zu der Datenmanagementvorrichtung (9) über das Sicherheitsnetzwerk (6) überträgt und
- die Datenmanagementvorrichtung (9) die Daten zur externen Vorrichtung (7) über das Sicherheitsnetzwerk (6) überträgt.

8. Computersystem nach Anspruch 6 oder 7, in dem jede sendende Vorrichtung eine entsprechende Identifikationsinformation überträgt und das Sicherheitsnetzwerk (6) für jeden Datentransfer durch dasselbe überprüft, ob die Identifikation der entsprechenden sendenden Vorrichtung mit vorgespeicherten Informationen übereinstimmt, welche während einem Autorisationsverfahren gespeichert werden.

9. Computersystem nach zumindest einem der Ansprüche 6 bis 8, in dem während dem Autorisationsverfahren
- das Sicherheitsnetzwerk (6) Identifikationsinformation von der externen Vorrichtung (7) liest und
- die Sicherheitsvorrichtung die Identifikationsinformation überprüft und eine Zugriffsautorisierung ausgibt, welche in dem Sicherheitsnetzwerk (6) gespeichert wird.

10. Computersystem nach zumindest einem der Ansprüche 6 bis 9, in dem bei der ersten Verbindung der externen Vorrichtung (7) mit dem Sicherheitsnetzwerk (6), das Sicherheitsnetzwerk (6) einen Samen zu der externen Vorrichtung (7) sendet und die externe Vorrichtung (7) die Identifikationsinformation gemäß dem Samen verschlüsselt und die verschlüsselte Identifikationsinformation zu dem Sicherheitsnetzwerk (6) überträgt.

11. Computersystem nach Anspruch 10, in dem das Sicherheitsnetzwerk (6) die empfangene verschlüsselte Identifikationsinformation zusammen mit dem Samen zu der Sicherheitsvorrichtung (8) überträgt, welche die Identifikationsinformation entschlüsselt und eine Sicherheitsüberprüfung durchführt.

12. Computersystem nach zumindest einem der Ansprüche 6 bis 11, in dem während dem Autorisationsverfahren die Sicherheitsvorrichtung (8) überprüft, ob
- die übertragene Benutzerinformation mit in einer Autorisationsdatei in der Sicherheitsvorrichtung (8) gespeicherten Daten übereinstimmt,
- eine vorbestimmte Anzahl von Sicherheitsanforderungen erfüllt sind, enthaltend Zugriffsdaten, nicht zugelassener Benutzer und Anzahl der Login-Fehler und
- die Identifikationsinformation von dem Sicherheitsnetzwerk (6) gesendet ist, und
die Sicherheitsvorrichtung (8) eine vorgespeicherte Adreßinformation aus einer Adreßdatei liest, wenn die Sicherheitsüberprüfung positiv erfüllt ist und die Adreßinformation zu dem Sicherheitsnetzwerk (6) sendet.

13. Computersystem nach Anspruch 12, in dem das Sicherheitsnetzwerk (6) die Adreßinformation speichert, um zu definieren, zu welchen Teilen des Computersystems die externe Vorrichtung (7) Zugriff hat.

14. Computersystem nach Anspruch 12 oder 13, in dem die Sicherheitsvorrichtung (8) bestimmt, ob die vorgespeicherte Adreßinformation von dem Sicherheitsnetzwerk (6) gesendet wird, durch ein Überprüfen, ob der Kanal, auf dem das Sicherheitsnetzwerk (6) sendet, gleich einem Kanal ist, der dem Sicherheitsnetzwerk (6) während dem Initialisierungs-Setup-Verfahren gegeben wird, wobei das Sicherheitsnetzwerk (6) die einzige Vorrichtung ist, welche Daten zu und von der Sicherheitsvorrichtung (8) übertragen und empfangen kann.

15. Computersystem nach zumindest einem der Ansprüche 6 bis 14, in dem die Datenmanagementvorrichtung (9) eine Abhängigkeitsliste speichert, die Informationen betreffend den Vorrichtungen enthält, die für ein spezifisches Datenmanagement notwendig sind.

16. Computersystem nach Anspruch 15, in dem die Datenmanagementvorrichtung (9) während einem Startverfahren gemäß der Abhängigkeitsliste überprüft, ob alle benötigten Vorrichtungen in einem Online-Status sind, bevor die Datenübertragung für ein spezifisches Datenmanagement aktiviert wird.

17. Computersystem nach zumindest einem der Ansprüche 6 bis 16, in dem die Datenschnittstellenvorrichtung (10) permanent einen Datenstrom empfängt, der zumindest Optionsscheinkurse enthält und die Daten in spezifischen Speicherstellen an spezifischen Adressen speichert, wobei neu hereinkommende Daten die alten Daten an den spezifischen Speicherstellen überschreiben.

18. Verfahren zum Betreiben eines Computersystems für das Durchführen eines automatischen Datenmanagements, das zumindest das Management von Daten betreffend dem Handeln von Optionsscheinen enthält, mit den folgenden Schritten:
- Anzeigen einer ersten Maske auf einer Anzeigeeinheit (3), wobei die erste Maske ein Format aufweist, das die Eingabe einer Anforderung für spezifische zumindest Optionsscheinkurse enthaltende Daten durch eine Eingabeeinheit (2) erlaubt,
- Lesen der angeforderten Daten, wenn die Anforderung durch die Eingabeeinheit (2) eingegeben wird,
- Anzeigen auf der Anzeigeeinheit (3) einer zweiten Maske, die die angeforderten Daten enthält,
- Halten der angeforderten Daten für eine vorbestimmte Zeitdauer Tₛₑₜ und
- Durchführen einer Transaktion betreffend den spezifischen Daten, wenn eine Transaktionsanforderung durch die Eingabeeinheit (2) während der vorbestimmten Zeitperiode Tₛₑₜ eingegeben wird.

19. Verfahren nach Anspruch 18, in dem die erste Maske eine Handelsmaske (13) ist, die die Eingabe einer Identifikationsnummer für die spezifischen Daten durch die Eingabeeinheit (2) erlaubt, um die spezifischen Daten von dem Dateneingang (5) zu lesen.

20. Verfahren nach Anspruch 19, in dem die Identifikationsnummer eine Wertpapierkennummer ist.

21. Verfahren nach Anspruch 18, in dem die erste Maske die Eingabe einer Anforderung für eine Kursseite (18) ist, die eine Vielzahl von spezifischen Daten enthält und die Eingabe der Anforderung für spezifische Daten erlaubt.

22. Verfahren nach Anspruch 21, in dem die Kursseite (18) die Eingabe einer Kurserneuerungsanforderung erlaubt, was ein Lesen der aufgelisteten Mehrzahl von spezifischen Daten zur Folge hat und daß dieselben in der Kursseite (18) auf der Anzeigeeinheit (3) dargestellt werden.

23. Verfahren nach zumindest einem der Ansprüche 18 bis 22, in dem die Eingabe einer Anforderung für spezifische Daten oder die Kurserneuerungsanforderung das Lesen eines Datenstroms verursacht, der permanent von dem System durch den Dateneingang (5) empfangen wird.

24. Verfahren nach zumindest einem der Ansprüche 18 bis 23, in dem die zweite Maske eine Quotationsmaske (14) ist, die die Eingabe einer Wiederanforderung für spezifische Daten erlaubt, wenn die Transaktionsanforderung nicht während der vorbestimmten Zeitdauer Tₛₑₜ eingegeben wird.

25. Verfahren nach zumindest einem der Ansprüche 18 bis 24, in dem ein Anzeigen einer die Transaktionsinformationen enthaltenden Handelsbestätigungsmaske (15) auf der Anzeigeeinheit (3), wenn die Transaktionsanforderung rechtzeitig eingegeben wird.

26. Verfahren nach zumindest einem der Ansprüche 18 bis 25, in dem die Handelsmaske (13) und die Quotationsmaske (14) auf der Anzeigeeinheit (3) auf verschiedenen Bildschirmen oder auf einem Bildschirm angezeigt werden.

27. Verfahren nach zumindest einem der Ansprüche 18 bis 26, in dem das Datenmanagement das Management von Daten betreffend dem Handel von Aktien, Bondes, Derivativen oder Devisen enthält, wobei die spezifischen Daten Aktienkurse, Bondkurse, Derivativkurse oder Devisenpreise enthalten.

## Revendications

1. Système informatique pour la gestion de données dont au moins la gestion de données relatives au négoce de titres au porteur, comprenant un système de traitement de données (1), une unité d'entrée (2), une unité d'affichage (3) et une entrée de données (5) recevant au moins des cours de titres au porteur, dans lequel:
- l'unité d'affichage (3) affiche une première page ayant un format permettant d'introduire par l'intermédiaire de l'unité d'entrée (2) une demande de données spécifiques, lesquelles comprennent au moins des cours de titres au porteur,
- l'entrée de données (5) est lue si la demande est introduite par l'intermédiaire de l'unité d'entrée (2),
- l'unité d'affichage (3) affiche une seconde page comprenant les données demandées, et
- le système de traitement des données (1) maintient les données demandées pendant une période de temps prédéterminée Tₛₑₜ et effectue une transaction se rapportant aux données spécifiques, si une demande de transaction est introduite dans l'unité d'entrée (2) pendant la période de temps prédéterminée Tₛₑₜ.

2. Système informatique selon la revendication 1, dans lequel la première page est une page de négoce (13) et la seconde page est une page de cotation (14).

3. Système informatique selon la revendication 2, dans lequel la page de négoce (13) permet l'introduction par l'intermédiaire de l'unité d'entrée (2) d'un numéro d'identification relatif aux données spécifiques, en vue de lire les données spécifiques provenant de l'entrée de données (5).

4. Système informatique selon la revendication 3, dans lequel le numéro d'identification est un numéro de bourse.

5. Système informatique selon la revendication 2, dans lequel la page de négoce (13) permet l'introduction d'une demande pour une page de cours (18) comportant une pluralité de données spécifiques, et dans lequel la page de cours (18) permet l'introduction de la demande pour les données spécifiques.

6. Système informatique selon l'une au moins des revendications 1 à 5, dans lequel le système de traitement de données (1) comprend un réseau de sécurité (6) connecté à un circuit externe (7), un circuit de sécurité (8), un circuit de gestion de données (9), un circuit d'interface de données (10) et un circuit de sortie (11), le circuit externe (7) comprenant l'unité d'entrée (2) et l'unité d'affichage (3).

7. Système informatique selon la revendication 6, dans lequel, lors de l'introduction de la demande pour des données spécifiques par l'intermédiaire de l'unité d'entrée (2),
- le circuit externe (7) délivre la demande pour des données spécifiques et transmet la demande au réseau de sécurité (6),
- le réseau de sécurité (6) contrôle la demande quant à son autorisation et la transmet au circuit de gestion de données (9) si le contrôle effectué a abouti à une autorisation du circuit externe (7) pour le circuit de gestion de données (9),
- le circuit de gestion de données (9) délivre un message au réseau de sécurité (6) afin d'accéder aux données (5) provenant du circuit d'interface de données (10) si le contrôle effectué a abouti à une autorisation du circuit externe (7) pour le circuit d'interface de données (10),
- le circuit d'interface de données (10) transmet les données auxquelles il a été accédé au circuit de gestion de données (9) par l'intermédiaire du réseau de sécurité (6), et
- le circuit de gestion de données (9) transmet les données au circuit externe (7) par l'intermédiaire du réseau de sécurité (6).

8. Système informatique selon la revendication 6 ou 7, dans lequel chaque circuit d'émission transmet une information d'identification respective, et dans lequel le réseau de sécurité (6) contrôle pour chaque transfert de données effectué par ledit circuit d'émission si l'identification du circuit d'émission respectif est en accord avec des informations en mémoire qui ont été préenregistrées durant une procédure d'autorisation.

9. Système informatique selon au moins l'une des revendications 6 à 8, dans lequel durant la procédure d'autorisation
- le réseau de sécurité (6) lit des informations d'identification provenant du circuit externe (7), et
- le circuit de sécurité (8) contrôle les informations d'identification et délivre une autorisation d'accès qui est mémorisée dans le réseau de sécurité (6).

10. Système informatique selon au moins l'une des revendications 6 à 9, dans lequel au moment de la première connexion du circuit externe (7) au réseau de sécurité (6), le réseau de sécurité (6) envoie une clé au circuit externe (7), et
le circuit externe (7) code les informations d'identification selon la clé et transmet les informations d'identification codées au réseau de sécurité (6).

11. Système informatique selon la revendication 10, dans lequel le réseau de sécurité (6) transmet les informations d'identification codées reçues avec la clé au circuit de sécurité (8) qui décode les informations d'identification et effectue un contrôle de sécurité.

12. Système informatique selon au moins l'une des revendications 6 à 11, dans lequel, durant la procédure d'autorisation, le circuit de sécurité (8) vérifie si
- l'information utilisateur transmise s'accorde avec des données mémorisées dans un fichier d'autorisation du circuit de sécurité (8),
- un nombre prédéterminé de conditions de sécurité requises sont remplies, dont des données d'accès et un nombre de tentatives de connexion manquées, et
- les informations d'identification ont été envoyées à partir du réseau de sécurité (6), et
le circuit de sécurité (8) lit des informations d'adresse préenregistrées dans un fichier d'adresses si le contrôle de sécurité est positif, et envoie les informations d'adresse au réseau de sécurité (6).

13. Système informatique selon la revendication 12, dans lequel le réseau de sécurité (6) mémorise les informations d'adresse afin de définir à quelles parties du système informatique peut avoir accès le circuit externe (7).

14. Système informatique selon la revendication 12 ou 13, dans lequel le circuit de sécurité (8) détermine si les informations d'adresse préenregistrées proviennent du réseau de sécurité (6), en contrôlant si le canal sur lequel le réseau de sécurité (6) transmet est le même que le canal dédié au réseau de sécurité (6) pendant la procédure d'installation, le réseau de sécurité (6) étant le seul circuit autorisé à émettre des données vers le circuit de sécurité (8) et à en recevoir de celui-ci.

15. Système informatique selon au moins l'une des revendications 6 à 14, dans lequel le circuit de gestion de données (9) mémorise une liste de dépendances comprenant des informations relatives aux circuits qui sont nécessaires pour une gestion de données spécifiques.

16. Système informatique selon la revendication 15, dans lequel, durant une procédure de démarrage, le circuit de gestion de données (9) contrôle d'après la liste de dépendances si tous les circuits nécessaires sont connectés avant que le transfert de données relatif à une gestion de données spécifiques ait lieu.

17. Système informatique selon au moins l'une des revendications 6 à 16, dans lequel le circuit d'interface de données (10) reçoit en permanence un flux de données comprenant au moins des cours de titres au porteur et mémorise les données en des emplacements de mémoire spécifiques, les nouvelles données en entrée écrasant les anciennes dans l'emplacement de mémoire spécifique.

18. Méthode de fonctionnement d'un système informatique pour la gestion de données dont au moins la gestion de données relatives au négoce de titres au porteur, comprenant les étapes suivantes :
- afficher sur une unité d'affichage (3) une première page ayant un format permettant l'introduction par l'intermédiaire d'une unité d'entrée (2) d'une demande pour des données spécifiques, lesdites données spécifiques comprenant au moins des cours de titres au porteur,
- lire les données demandées, si la demande est introduite par l'intermédiaire de l'unité d'entrée (2),
- afficher sur le circuit d'affichage (3) une seconde page comportant les données demandées,
- maintenir les données demandées pendant une période de temps prédéterminée Tₛₑₜ, et
- effectuer une transaction se rapportant aux données spécifiques si une demande de transaction est introduite par l'intermédiaire de l'unité d'entrée (2) pendant la période de temps prédéterminée Tₛₑₜ.

19. Méthode selon la revendication 18, dans laquelle la première page est une page de négoce (13) permettant d'introduire par l'intermédiaire de l'unité d'entrée (2) un numéro d'identification relatif aux données spécifiques en vue de lire les données spécifiques provenant de l'entrée de données (5).

20. Méthode selon la revendication 19, dans laquelle le numéro d'identification est un numéro de bourse.

21. Méthode selon la revendication 18, dans laquelle la première page permet d'introduire une demande pour une page de cours (18) comprenant une pluralité de données spécifiques, et dans laquelle la page de cours (18) permet l'introduction d'une demande pour des données spécifiques.

22. Méthode selon la revendication 21, dans laquelle la page de cours (18) permet l'introduction d'une demande de réactualisation des cours se traduisant par une lecture de la pluralité de données spécifiques listée et par un affichage de celles-ci dans la page de cours (18) dans l'unité d'affichage (3).

23. Méthode selon au moins l'une des revendications 18 à 22, dans laquelle l'introduction d'une demande pour des données spécifiques ou de la demande de réactualisation des cours provoque la lecture d'un flux de données reçu en permanence par le système en provenance de l'entrée de données (5).

24. Méthode selon au moins l'une des revendications 18 à 23, dans laquelle la seconde page est une page de cotation (14) permettant d'introduire un renouvellement de demande pour des données spécifiques, si la demande de transaction n'est pas introduite durant la période de temps prédéterminée Tₛₑₜ.

25. Méthode selon au moins l'une des revendications 18 à 24, dans laquelle est affichée une page de confirmation de négoce (15) comprenant des informations de transaction si la demande de transaction a été introduite en temps voulu.

26. Méthode selon au moins l'une des revendications 18 à 25, dans laquelle sont affichées dans l'unité d'affichage (3), la page de négoce (13) et la page de cotation (14) sur des écrans distincts ou bien sur un seul écran.

27. Méthode selon au moins l'une des revendications 18 à 26, dans laquelle la gestion de données comprend la gestion de données relatives à des titres, obligations, titres de propriété ou devises étrangères, et dans laquelle les données spécifiques comprennent des cours de titres, des cours d'obligations, des cours de titres de propriété et des cours de devises étrangères.
